# EUROPÄISCHE PATENTSCHRIFT

(11) **EP 0 636 516 B1**
(45) Veröffentlichungstag und Bekanntmachung des Hinweises auf die Patenterteilung: **03.07.1996**
(21) Anmeldenummer: 94105315.9
(22) Anmeldetag: 06.04.1994
(51) Int. Cl.: B60R 11/02, G08B 13/14

(54) **Aktivierungsschaltung zur Auslösung einer codegeschützten Diebstahlsicherung**
Activating circuit for triggering a code-controlled anti-theft security
Circuit d'activation pour déclencher un système à code anti vol

(30) Priorität: 27.07.1993 DE 4325126
(43) Veröffentlichungstag der Anmeldung: 01.02.1995
(73) Patentinhaber: GRUNDIG E.M.V. Elektro-Mechanische Versuchsanstalt Max Grundig GmbH & Co. KG, D-90762 Fürth (DE)
(72) Erfinder: Nöth, Helmut, D-90748 Fürth (DE)

(56) Entgegenhaltungen:
- EP-A- 0 195 972
- WO-A-93/05486
- DE-A- 3 723 931
- ELEKTOR ELECTRONICS, Bd.12, Nr.135, Juli 1986, CANTERBURY GB Seite 1 'CAR RADIO ALARM'

## Beschreibung

Die Erfindung betrifft eine mikrocomputergesteuerte Schaltung zur Aktivierung einer codegeschützten Diebstahlsicherung für elektronische Geräte nach dem Oberbegriff des Anspruchs 1.

Nach dem Stand der Technik werden zum Schutz gegen Diebstahl insbesondere bei mobilen Geräten der Kommunikations- und Unterhaltungselektronik Sicherungseinrichtungen verwendet, mit deren Hilfe die Gerätefunktionen blockiert werden, solange nach einem vorübergehenden Ausfall der Betriebsspannung bei einem anschließenden Vergleich zwischen einem zuvor abgespeicherten Referenzcode und einem neu einzugebenden Code keine Übereinstimmung erzielt wird. Solche Sicherungseinrichtungen sind fast durchweg mit einem Mikrocomputer versehen, der auch gleichzeitig zur Steuerung der Gerätefunktionen eingesetzt wird.

Eine Diebstahlsicherung dieser Art ist beispielsweise aus der deutschen Offenlegungsschrift DE 3637019 A1 bekannt. Eine ähnliche Codesicherung ist in der deutschen Patentschrift DE 3440379 C2 offenbart.

Die in diesen Druckschriften beschriebenen Diebstahlschutzvorrichtungen haben den Nachteil, daß sie leicht zu überlisten sind, wenn das gestohlene Gerät unmittelbar nach dem Abtrennen von der Spannungsversorgung an eine andere Stromquelle angeschlossen wird. Da bei ausgeschaltetem Gerät durch den dann im "Sleep-Mode" arbeitenden Mikrocomputer nur sehr wenig Strom verbraucht wird, andererseits aber die Geräte zur Erzielung einer guten Siebung große Ladekondensatoren als Energiepuffer besitzen, fällt die innere Betriebsspannung eines Gerätes beim Abklemmen der externen Spannungsversorgung nur langsam ab.

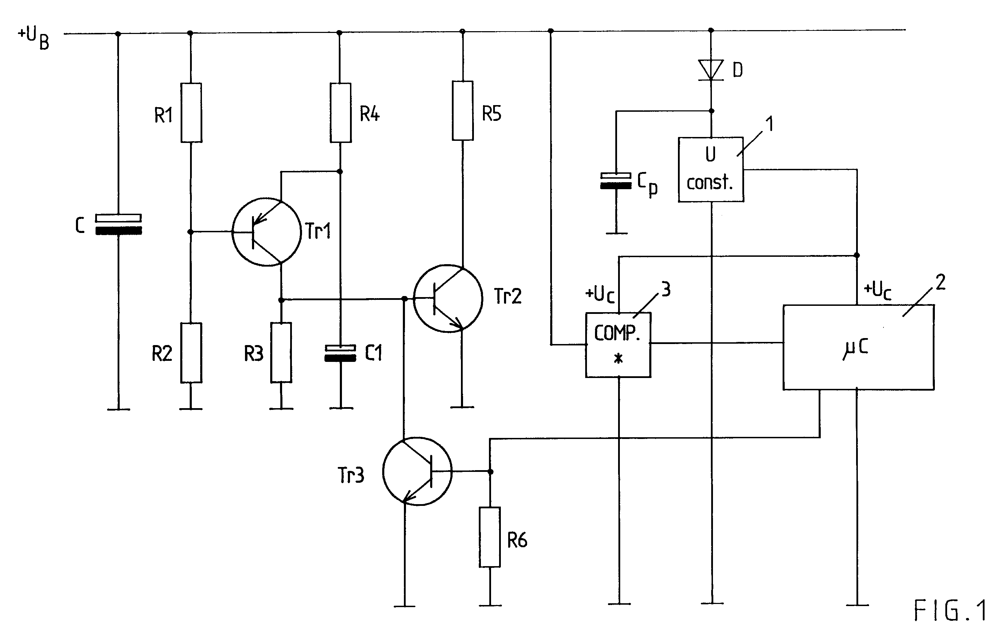

Um diesen Mangel zu beseitigen, ist es bekannt, eine Zwangsentladeschaltung für den Ladekondensator entsprechend Fig. 1 vorzusehen, die auf einen zunächst langsamen Spannungsabfall am Batterie- oder Netzteilanschluß des Gerätes reagiert und die dazu dient, einen Ausfall der Betriebsspannung sicher von einem Spannungseinbruch durch Laständerung zu unterscheiden.

Diese Schaltung vergleicht den über den Spannungsteiler R₁, R₂ gemessenen Momentanwert mit dem über das Integrationsglied R₄, C₁ gewonnenen zeitlichen Mittelwert der Betriebsspannung U_{B} und schaltet den Transistor Tr₁ durch, sobald die Spannungsdifferenz zwischen dem Mittelwert und dem Momentanwert die notwendige U_{BE}-Schwelle des Transistors TR₁ übersteigt. Das sich am Kollektorwiderstand R₃ aufbauende Spannungspotential steuert gleichzeitig den Schalttransistor Tr₂ durch, so daß der Ladekondensator C über den Lastwiderstand R₅ sehr schnell entladen werden kann.

Da der Mikrocomputer 2 während des Zusammenbrechens der Betriebsspannung U_{B} über den Spannungsstabilisator 1 aus dem Kondensator C_{P} gepuffert wird, bleibt er über den Zeitpunkt hinaus betriebsbereit, an dem der Komparator 3 erkennt, daß die Betriebsspannung U_{B} die Triggerschwelle zur Auslösung des Diebstahl-Modus erreicht hat. Auf diese Weise ist es möglich, daß vor dem Zusammenbruch der eigenen Versorgungsspannung U_{c} der Mikrocomputer 2 in einem nichtflüchtigen Speicherbereich ein Flag setzt, das bei Wiederanschluß des Gerätes an die externe Spannungsversorgung die Blockade sämtlicher Betriebsfunktionen bewirkt. Erst durch die Eingabe eines Sicherungscodes kann die Sperre wieder aufgehoben werden, sofern der eingegebene Code mit einem im Mikrocomputer 2 nichtflüchtig abgespeicherten Referenzcode übereinstimmt.

Die in Fig. 1 dargestellte Zwangsentladeschaltung reagiert jedoch auch auf Schwankungen der Betriebsspannung U_{B} aufgrund von Laständerungen, wenn die extern angeschlossene Stromquelle keinen sehr kleinen Innenwiderstand besitzt. Um diesen Nachteil auszuschalten, muß der Schalttransistor Tr₂ während des gebrauchsmäßigen Betriebes des Gerätes gesperrt werden. Dies erfolgt über den Transistor Tr₃, der vom Mikrocomputer 2 den Betriebsbedingungen entsprechend angesteuert wird.

Insgesamt erfordert die beschriebene Schaltung einen erheblichen Hardwareaufwand, wobei sie als weiteren Nachteil aufweist, daß sie bei einem manipuliert langsamen Absenken der Betriebsspannung U_{B} nicht zum Auslösen des Diebstahl-Modus führt, da in diesem Fall die Differenz zwischen den Momentanwerten und den zeitlichen Mittelwerten der Betriebsspannung U_{B} so klein ist, daß keine Zwangsentladung eingeleitet wird, und der Mikrocomputer 2 seine für eine einwandfreie Funktion notwendige Betriebsspannung unterschreitet, bevor die zur Auslösung der Sicherungsfunktion notwendige Triggerschwelle erreicht wird.

Es ist deshalb Aufgabe der vorliegenden Erfindung, eine Schaltung anzugeben, welche die vorbeschriebenen Nachteile umgeht und im wesentlichen auf geräteseitig bereits vorhandene Baugruppen zurückgreift.

Diese Aufgabe wird durch eine Schaltungsanordnung mit den Merkmalen des Anspruchs 1 gelöst. Weitere vorteilhafte Ausgestaltungen der Erfindung sind in den Unteransprüchen 2 bis 4 offenbart.

Der Vorteil der im Anspruch 1 beschriebenen Anordnung liegt in dem geringen hardwaremäßigen Aufwand, da die Auswertung der sich ändernden Betriebsspannung im bereits vorhandenen Mikrocomputer erfolgt. Insbesondere werden für die Zwangsentladung des Ladekondensators geräteseitig vorhandene Verstärkerkreise eingeschaltet.

Die Ansprechempfindlichkeit gegen Lastschwankungen der Betriebsspannung ist so gering, daß auf eine gesonderte Schaltung zur Inaktivierung der Schnellentladung während des gebrauchsmäßigen Betriebes des Gerätes verzichtet werden kann.

Mit der nach Anspruch 2 definierten Anordnung wird in vorteilhafter Weise erreicht, daß auch bei manipuliert langsamer Verringerung der Betriebsspannung die Sicherungsfunktion des Mikrocomputers nicht außer Betrieb gesetzt wird.

Ebenso wird in vorteilhafter Weise mit der Anordnung nach Anspruch 3 vermieden, daß die Diebstahlsicherung durch steilflankiges Reduzieren der Betriebsspannung auf einen von null Volt abweichenden Wert überlistet werden kann.

Die im Anspruch 4 offenbarte Anordnung hat den Vorteil, daß beim Unterschreiten bestimmter Betriebsspannungsgrenzen keine Verzerrungen oder akustischen Störgeräusche hörbar werden.

Die Erfindung wird nachfolgend anhand der Zeichnungen näher erläutert. Es zeigen:
- Fig.1: das Systemschaltbild einer Zwangsentladeschaltung nach dem Stand der Technik;
- Fig. 2: das Blockschaltbild der erfindungsgemäßen Schaltung;
- Fig. 3: ein Diagramm über den zeitlichen Verlauf der Betriebsspannung beim Abtrennen der externen Spannungsversorgung.

Innerhalb der Schaltungsanordnung nach Fig. 1 hat der Mikrocomputer 2 keinen Einfluß auf das Entladen des Ladekondensators C beim Abtrennen der externen Spannungsversorgung. Er löst nur den Sicherungsmodus aus, sobald er vom Komparator 3 den notwendigen Triggerimpuls erhält. Die Zwangsentladung des Ladekondensators C erfolgt über den Hochlastwiderstand R₅ und den Schalttransistor Tr₂, der von der Komparatorstufe Tr₁ angesteuert wird.

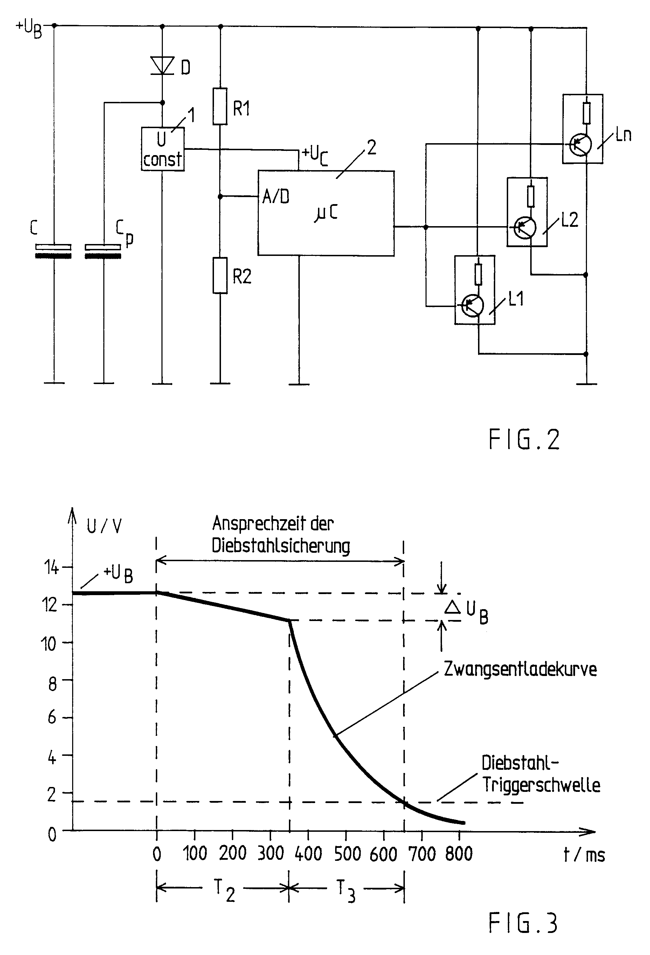

Demgegenüber wird mit der erfindungsgemäßen Schaltung nach Fig. 2 das Verhalten der Betriebsspannung U_{B} vom Mikrocomputer 2 überwacht. Dieser erhält seine stabilisierte Versorgungsspannung U_{c} über den Spannungskonstanter 1, der über die Entkopplungsdiode D von der höhervoltigen Betriebsspannung U_{B} gespeist und dessen Eingangsspannung mit Hilfe des Kondensators C_{P} gepuffert wird.

Der Mikrocomputer 2 besitzt einen Analog-/Digital-Wandlereingang A/D, dem über den Spannungsteiler R₁, R₂ der Momentanwert der Betriebsspannung U_{B} zugeführt wird. Aus der Folge der Momentanwerte bildet der Mikrocomputer 2 mit Hilfe eines geeigneten Algorithmus fortlaufend einen zeitlichen Mittelwert über einen ersten Zeitraum T₁ von beispielsweise 1 Minute und vergleicht diesen Wert jeweils mit den periodisch abgefragten Momentanwerten. Wenn ab einem beliebigen Zeitpunkt t=O die Momentanwerte stetig abnehmen und die Spannungsdifferenz Δ U_{B} nach einer zweiten Zeitspanne T₂ im Verhältnis zum zeitlichen Mittelwert eine vorgegebene Größe erreicht, um mit Sicherheit einen Ausfall der externen Spannungsversorgung detektieren zu können, werden durch den Mikrocomputer 2 ein oder mehrere im Gerät vorhandene Verstärkerkreise L₁ ...Lₙ (z.B. HF-Empfangskreis, RDS-Decoder, Endstufe oder ähnliches) zur Belastung des Ladekondensators C aktiviert, wobei alle optischen und akustischen Signale nach außen unterdrückt werden. Der zeitliche Verlauf der geräteinternen Betriebsspannung U_{B} entspricht dann der beispielhaften Darstellung in Fig. 3. Innerhalb einer dritten Zeitspanne T₃ muß die Betriebsspannung U_{B} die Diebstahl-Triggerschwelle unterschreiten, da die zugeschalteten Entladungskreise eine definierte Belastung darstellen. Andernfalls ist davon auszugehen, daß der während der zweiten Zeitspanne T₂ aufgetretene Spannungsabfall nicht durch das Abtrennen der externen Spannungsversorgung, sondern, durch das Zuschalten einer niederohmigen Last an eine altersschwache Batterie mit ungenügender Ladung aufgetreten ist. In diesem Fall soll aber der Sicherungsmodus nicht ausgelöst werden.

Wird die Diebstahl-Triggerschwelle innerhalb der dritten Zeitspanne T₃ von der Betriebsspannung U_{B} unterschritten, so setzt der spannungsgepufferte Mikrocomputer 2 in einem ihm zugehörigen nichtflüchtigen Speicher (nicht dargestellt) ein Flag, das beim Wiederanschluß des Gerätes an eine externe Stromquelle die Ausführung der wesentlichen Gerätefunktionen durch den Mikrocomputer verhindert. Dieses Flag kann erst wieder gelöscht werden, wenn ein neu einzugebender Code mit einem bereits im Gerät abgespeicherten Referenzcode in Übereinstimmung gebracht wird.

Um zu verhindern, daß die Diebstahlsicherung durch manipuliert langsames Verringern der Betriebsspannung U_{B} derart überlistet wird, daß innerhalb der zweiten Zeitspanne T₂ die notwendige Spannungsdifferenz Δ U_{B} nicht erreicht wird, um die Zwangsentladung des Ladekondensators C einzuleiten, wird in einer vorteilhaften Ausgestaltung der Erfindung der Mikrocomputer zusätzlich so programmiert, daß er die Triggerschwelle zum Auslösen des Sicherungsmodus kontinuierlich anhebt, wenn die Abfrage der Momentanwerte der Betriebsspannung U₃ ergibt, daß diese fortlaufend auch über den Ablauf der zweiten Zeitspanne T₂ hinaus verringert wird. Auf diese Weise wird die Triggerschwelle schließlich so weit angehoben, daß bis zur Auslösung des Sicherungsmodus die Betriebsspannung U_{B} den Minimalwert der für eine einwandfreie Funktion des Mikroprozessors 2 notwendigen Versorgungsspannung U_{c} sicherstellt.

Wird die Betriebsspannung U_{B} steilflankig auf einen von null Volt abweichenden Wert reduziert, so wird der Mikrocomputer 2 nach Ablauf der zweiten Zeitspanne T₂ wegen Nichteinhaltung der vorgegebenen Entladesteilheit zwar keine Zwangsentladung des Ladekondensators C einleiten, aufgrund der aber nach dem dritten Zeitraum T₃ erreichten Betriebsspannung U_{B} entscheiden, ob ein Flag für den Sicherungsmodus gesetzt werden soll oder nicht. Liegt der Wert der Betriebsspannung U_{B} ausreichend hoch über dem für eine einwandfreie Funktion des Mikrocomputers notwendigen Versorgungsspannungswert U_{c}, so bleibt das Gerät in seiner normalen Betriebsfunktion, die Triggerschwelle wird jedoch so weit angehoben, daß bei einer weiteren Verringerung der Betriebsspannung U_{B} der Sicherungsmodus ausgelöst werden kann. Andernfalls erfolgt sofort die Diebstahlverriegelung.

Da bei einem kurzzeitigen Zusammenbrechen der Betriebsspannung U_{B}, z.B. durch Anlassen des Motors in einem Kraftfahrzeug, Verzerrungen und Störgeräusche in der akustischen Wiedergabe auftreten können, müssen die Audioverstärker während solcher Vorgänge stummgeschaltet werden. Der Mikrocomputer 2 erkennt aufgrund der dortlaufend gemessenen Momentanwerte der Betriebsspannung U_{B} solche Spannungseinbrüche und aktiviert die entsprechenden Stummschaltungen, wenn der Momentanwert der über den Spannungsteiler R₁, R₂ dem Analog-/Digital-Wandlereingang A/D des Mikrocomputers 2 zugeführten Betriebsspannung U_{B} einen vorgegebenen Grenzwert unterschreitet.

## Patentansprüche

1. Aktivierungsschaltung zur Auslösung einer codegeschützten Diebstahlsicherung durch Auswerten des Spannungsabfalls am Batterie- oder Netzteilanschluß eines zu schützenden Gerätes nach Abtrennen der Spannungsversorgung, mit einem Mikroprozessor (2) zur Steuerung der Sicherungs- und Gerätefunktionen und mit einem oder mehreren Zwangsentladekreisen mit einem Ladekondensator (C),
**dadurch gekennzeichnet**, daß
a) der Mikroprozessor (2) über einen Spannungsteiler (R₁, R₂) und einen Analog-/Digital-Wandlereingang (A/D) den Momentanwert der Betriebsspannung (U_{B}) periodisch abfragt, aus den jeweils ermittelten Momentanwerten einen für einen ersten Zeitraum (T₁) geltenden zeitlichen Mittelwert bildet und diesen fortlaufend mit den Momentanwerten vergleicht,
b) der Mikroprozessor (2) bei einem stetigen Abfall der Momentanwerte gegenüber dem zeitlichen Mittelwert innerhalb eines zweiten Zeitraumes (T₂) unter Einhaltung einer vorgegebenen Steilheit eine oder mehrere Entladekreise (L₁...Lₙ) aktiviert, um den Ladekondensator (C) kurzzeitig zu entladen, sofern keine Nachladung über den Betriebsspannungsanschluß erfolgt, und
c) der Mikroprozessor (2) eine Blockade der Gerätefunktionen auslöst, wenn die über den Spannungsteiler R₁, R₂ dem Analog-/Digital-Wandlereingang (A/D) des Mikroprozessors zugeführte Betriebsspannung (U_{B}) innerhalb einer vorgegebenen dritten Zeitspanne (T₃) ab dem Zeitpunkt der Aktivierung der Entladekreise eine bestimmte Triggerschwelle unterschreitet.

2. Aktivierungsschaltung nach Anspruch 1,
**dadurch gekennzeichnet**, daß der Mikroprozessor (2) bei manipuliert langsamer Verringerung der Betriebsspannung (U_{B}) die Triggerschwelle zur Auslösung der Sicherungsfunktion kontinuierlich erhöht, so daß vor Erreichen der für die einwandfreie Funktion des Mikroprozessors zulässigen unteren Grenze seiner eigenen Versorgungsspannung (U_{c}) der Diebstahlmodus ausgelost wird.

3. Aktivierungsschaltung nach Anspruch 1 oder 2,
**dadurch gekennzeichnet**, daß der Mikrocomputer (2) bei steilflankiger Reduzierung der Betriebsspannung (U_{B}) auf einen von null Volt abweichenden Wert die Triggerschwelle zur Auslösung des Sicherungsmodus so weit erhöht, daß abhängig von der Höhe der verbleibenden Betriebsspannung (U_{B}) entweder die Diebstahlverriegelung nach Ablauf der zweiten und dritten Zeitspanne (T₂, T₃) sofort aktiviert wird oder bei nachfolgender weiterer Verringerung der Betriebsspannung (U_{B}) ein rechtzeitiges Ansprechen der Diebstahlsicherung gewährleistet ist.

4. Aktivierungsschaltung nach einem der vorstehenden Ansprüche,
**dadurch gekennzeichnet**, daß der Mikrocomputer (2) bei Unterschreitung einer vorgegebenen Grenze der über den Spannungsteiler (R₁, R₂) dem Analog-/Digital-Wandlereingang (A/D) zugeführten Betriebsspannung (U₃) die für die akustische Wiedergabe zuständigen Verstärker stummschaltet.

## Claims

1. Activation circuit for triggering a code-protected anti-theft device by evaluating the voltage drop at the battery or power supply terminals of a unit to be protected after the power supply has been disconnected, having a microprocessor (2) to control the security functions and the functions of the unit, and having one or more rapid discharge circuits with a charging capacitor (C), **characterised in that**
a) the microprocessor (2) cyclically interrogates the instantaneous value of the operating voltage (U_{B}) via a voltage divider (R₁, R₂) and an analogue/digital input (A/D), and from each of the instantaneous values thus determined generates a time-averaged value which is effective for an initial time interval (T₁) and continuously compares this value with the instantaneous values,
b) in the event of a continuous reduction in the instantaneous values in relation to the time-averaged value within a second time interval (T₂) while a predetermined gradient is maintained, the microprocessor (2) activates one or more discharge circuits (L₁ ... Lₙ) in order to rapidly discharge the charging capacitor (C), provided no recharging occurs via the operating voltage terminals, and
c) the microprocessor (2) triggers the blocking of the unit's functions if the operating voltage (U_{B}) fed via the voltage divider R₁, R₂ to the analogue/digital converter input (A/D) of the microprocessor falls below a specific trigger threshold within a predetermined third time interval (T₃) from the time of the activation of the discharge circuits.

2. Activation circuit according to Claim 1, characterised in that in the event of a manipulated, slow reduction of the operating voltage (U_{B}), the microprocessor (2) continuously increases the trigger threshold to activate the security function so that the theft mode is triggered before the lower limit of the supply voltage (U_{C}) required for the proper functioning of the microprocessor is reached.

3. Activation circuit according to Claim 1 or 2, characterised in that in the event of a steep reduction in the operating voltage (U_{B}) to a value other than zero volts, the microcomputer (2) increases the trigger threshold for activating the security mode so that, depending on the value of the remaining operating voltage (U_{B}), either the anti-theft lockout is immediately activated on the expiry of the second and third time intervals (T₂, T₃), or in the event of a subsequent, further reduction in the operating voltage (U_{B}), the anti-theft device rapidly responds.

4. Activation circuit according to one of the preceding Claims, characterised in that if the operating voltage (U_{B}) fed via the voltage divider (R₁, R₂) to the analogue/digital converter input (A/D) falls below a predetermined limit, the amplifier responsible for the audible playback is muted.

## Revendications

1. Circuit d'activation pour déclencher un système antivol protégé par un code, par exploitation de la chute de tension au niveau de la borne de raccordement de la batterie ou de la borne de raccordement au réseau d'un appareil à protéger, après interruption de l'alimentation en tension, comportant un microprocesseur (2) pour commander la fonction de protection et les fonctions de l'appareil et un ou plusieurs circuits de décharge imposée, comportant un condensateur de charge (C), caractérisé en ce que
a) le microprocesseur (2) interroge périodiquement, au moyen d'un diviseur de tension (R₁, R₂) et d'une entrée de convertisseur analogique/numérique (A/D), la valeur instantanée de la tension de service (U_{B}), forme à partir des valeurs instantanées respectivement déterminées une valeur moyenne dans le temps valable pour un premier intervalle de temps (T₁) et compare cette valeur moyenne en permanence aux valeurs instantanées,
b) dans le cas d'une diminution continue des valeurs instantanées par rapport à la valeur moyenne dans le temps, pendant un second intervalle de temps (T₂), moyennant le maintien d'une pente prédéterminée, le microprocesseur (2) active un ou plusieurs circuits de décharge (L₁...Lₙ) de manière à décharger en un bref intervalle de temps le condensateur de charge (C), dans la mesure où aucune charge complémentaire n'est exécutée par l'intermédiaire de la borne de la tension de service, et
c) le microprocesseur (2) déclenche un blocage des fonctions de l'appareil lorsque la tension de service (U_{B}), envoyée par l'intermédiaire du diviseur de tension (R₁, R₂) à l'entrée du convertisseur analogique/numérique (A/D) du microprocesseur, tombe au-dessous d'un seuil déterminé de déclenchement, pendant un troisième intervalle de temps prédéterminé (T₃) à partir de l'instant de l'activation du circuit de décharge.

2. Circuit d'activation selon la revendication 1, caractérisé en ce que, dans le cas d'une réduction lente, obtenue par manipulation, de la tension de service (U_{B}), le microprocesseur (2) augmente continûment le seuil de déclenchement pour déclencher la fonction de sécurité de sorte que le mode antivol est déclenché avant que la limite inférieure, admissible pour le fonctionnement parfait du microprocesseur, de la propre tension d'alimentation (U_{c}) du microprocesseur soit atteinte.

3. Circuit d'activation selon la revendication 1 ou 2, caractérisé en ce que dans le cas d'une réduction à flanc raide de la tension de service (U_{B}) à une valeur différente de zéro volt, le micro-ordinateur augmente le seuil de déclenchement pour déclencher le mode de protection jusqu'à ce que, en fonction de l'amplitude de la tension de service restante (U_{B}), soit le système de verrouillage antivol est immédiatement activé après l'écoulement des second et troisième intervalles de temps (T₂, T₃), soit, dans le cas d'une réduction supplémentaire ultérieure de la tension de service (U_{B}), une réponse en temps opportun du système de protection antivol est garantie.

4. Circuit d'activation selon l'une des revendications précédentes, caractérisé en ce que lorsque la tension de service (U₃) envoyée par l'intermédiaire du diviseur de tension (R₁, R₂) à l'entrée du convertisseur analogique/numérique (A/D) tombe au-dessous d'une limite prédéterminée, le micro-ordinateur (2) rend sourd l'amplificateur exécutant la reproduction acoustique.
